# EUROPEAN PATENT SPECIFICATION

(11) **EP 3 670 219 B1**
(45) Date of publication and mention of the grant of the patent: **09.03.2022**
(21) Application number: 18382935.7
(22) Date of filing: 17.12.2018
(51) Int. Cl.: B60J 3/02

(54) **SUN VISOR AND METHOD OF MANUFACTURING A SUN VISOR**
SONNENBLENDE UND VERFAHREN ZUR HERSTELLUNG EINER SONNENBLENDE
PARE-SOLEIL ET PROCÉDÉ DE FABRICATION D'UN PARE-SOLEIL

(43) Date of publication of application: 24.06.2020
(73) Proprietor: Grupo Antolin Ingenieria, S.A.U., 09007 Burgos (ES)
(72) Inventor: GRANDMOUGIN, Didier, 09007 Burgos (ES); RICHARD, Stéphane, 09007 Burgos (ES)
(74) Representative: Balder IP Law, S.L.

(56) References cited:
- EP-A1- 0 058 742
- EP-A1- 0 070 379
- EP-A1- 0 577 828
- WO-A2-2007/021829
- US-B1- 6 557 920

## Description

### TECHNICAL FIELD

The present invention relates to sun visors for vehicles, such as cars and trucks.

### STATE OF THE ART

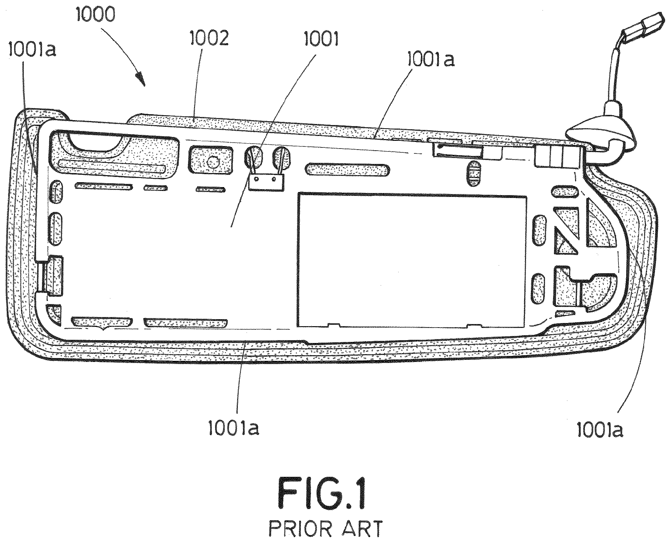

It is known in the art to manufacture sun visors by assembling two sun visor body components or pads, such as foam pads, onto a central core, that is, by assembling each of foam pads onto a respective one of the major surfaces of the core. The core is typically of a plastic material, such as polypropylene (PP) or polyamide (PA), often including mineral fibers for enhanced stiffness. The foam pads, which define the outer shape of the sunvisor, are typically of a light-weight material with a softer touch, frequently expanded polypropylene (EPP). Figure 1 schematically illustrates a prior art sunvisor 1000, including a plastic core 1001 and two EPP pads 1002, only one of which is shown in figure 1. The other EPP pad will cover the major surface of the core 1001 that is visible in figure 1. Thus, the core will be sandwiched between the foam pads. As shown in figure 1, the foam pads extend beyond the perimeter 1001a of the core so that the core will be substantially completely enclosed by the foam pads 1002. Thus, the foam pads define the external shape of the sun visor. Document WO2007/021829 A2 is also an example of such prior art.

The sun visor body made up of the core and the foam pads is generally covered by a cover. For flexibility, for example, to allow the visible and touchable surface of the sun visor to feature a certain visual appearance and/or tactile feel, it is desirable that a given type of sun visor body can be provided with a cover of a material to be chosen by the manufacturer, vehicle designer, customer, etc. For example, many vehicle manufacturers wish to allow their customers to choose aspects such as the material and appearance of the interior of the vehicle, including the sun visors.

Thus, it is desirable that a given sun visor body (comprising core and foam pads) be capable of being provided with a cover of for example PVC (Polyvinyl Chloride), a woven or non-woven fabric, etc., depending on the choice of the manufacturer, designer, purchaser, etc. Traditionally, depending on the kind of cover, specific tools and processes are used to apply the cover onto the EPP pads. For example, in the case of a cover made up of some kind of woven or non-woven fabric, such as a textile cover, the cover can be glued onto the foam pads before they are assembled onto the core. Thus, basically, depending on the specific material chosen for the cover, a specific method of applying it to the sun visor body is required.

It is also known in the art to manufacture sun visors by assembly two plastic twin-shells to constitute the structure and external shape of the sun visor. One alternative manner of applying a cover to this kind of sun visor body is by providing a cover shaped as a bag-like or sock-like structure, featuring an opening into which the sun visor body can be inserted with snug fit. Thus, the cover can be applied to the sun visor body in a manner similar to the one in which a sock is applied to a foot of its wearer. Once the sun visor body has been inserted in the cover, the opening of the cover is slipped between the plastic shells to hold the cover in place. One advantage of this solution is that the dressing of the core with the cover is very simple and independent of the cover material because the conformation of the sock (for example by sewing a fabric or by welding a PVC) is done in a step previous to the dressing step.

### DESCRIPTION OF THE INVENTION

It may be desirable to use a sock-like cover in sun visors constituted by a plastic core and two pads, such as foam pads, (for example of expanded polypropylene) but the strength and rigidity of EPP pads is not sufficient to generate an efficient retention on the cover.

A first aspect of the invention relates to a sun visor core comprising two major surfaces and a perimeter wherein in correspondence with one portion of the perimeter the core comprises a retention member for retaining a portion of a flexible cover, the retention member comprising an aperture for receiving the portion of the flexible cover. The retention member further comprises, in said aperture, a plurality of projections adapted for engaging the flexible cover. The term "core" here refers to the kind of sun visor core that features two major surfaces configured or adapted for receiving respective pads so that the core and the pads together form a sun visor body.

This arrangement is compatible with a wide range of possible cover materials, for example, woven and non-woven fabrics, PVC, etc., thereby providing flexibility at a low cost, something that is very advantageous in the very competitive field of vehicle components. The same sun visor core may be compatible with a wide range of cover materials, and by using a core as per the invention covers of different materials can be applied to the sun visor body using the same or similar tools and processes.

The core is substantially made of a plastic material such as PP or PA, optionally including reinforcing components such as mineral fibers, etc. The perimeter of the core comprises the external sides or edges of the core, that is, the outline of the core when viewed perpendicularly to one of its two principal or major surfaces. The major surfaces are each adapted for receiving a respective one of two components that substantially determine the outer shape of the sun visor and which are referred to as "pads" herein. In some embodiments, the pads are substantially made up of EPP.

In some embodiments, the retention member is an integral part of the core, that is, for example, the core including the retention member can be an integrally molded component. In other embodiments, the retention member can be a separate component, for example, a component made in a material different from the one of the rest of the core.

The projections or teeth that are adapted for engaging the flexible cover can have any suitable configuration. The projections preferably feature a bevel so that their height increases in the direction inwards from the aperture, so as to facilitate insertion of the end portion of the cover, and in some embodiments the bevel is followed by a surface that is parallel with the plane of the surface of the retention member from which the projections extend. In some embodiments, the teeth are offset or recessed from the perimetric edge of the retention member.

In some embodiments the aperture is situated between two edges of the retention member extending along a portion of the perimeter of the core. This position and implementation of the aperture has been found to be practical and easy to implement, both in the case of a retention member integrally formed, such as integrally molded, with the rest of the core or part of it, and in the case of a separately manufactured retention member that is added to the rest of the core.

In some embodiments the aperture is defined between two opposing internal surfaces of the retention member and the projections extend from said surfaces forming at least a first row of projections extending from a first one of said surfaces, and a second row of projections extending from a second one of said surfaces. The use of two rows of surfaces has been considered preferable for secure retention of the end of the cover.

In some embodiments the first row of projections and the second row of projections are staggered or offset in relation to each other, so that at least some of the projections of the first row of projections are placed between two projections of the second row of projections, and vice-versa. This has been found to be beneficial for easy insertion of the end of the cover into the aperture, and/or for reliable retention thereof in the aperture.

In some embodiments at least some of the projections of the first row of projections are spaced a distance (b) in the range of 5-15 mm from the adjacent projections in the second row of projections in the direction along the rows of projections, and in each of the rows of projections, the distance (a) between at least two adjacent projections is in the range of 15-30 mm, these distances corresponding to the spacings between the centerpoints of the respective projections.

In some embodiments the aperture has a height (f) in the range of 1.5-3 mm.

In some embodiments at least some of the projections have a height (c) in the range of 1-2 mm.

In some embodiments at least some of the projections have a length (d) in the direction into the aperture in the range of 3-10 mm. In some embodiments at least some of the projections have a width (e) in the direction along the aperture in the range of 0.5-2 mm. The dimensions defined above have been found to be appropriate for adequate performance, considering the typical dimensions of sun visors and the thickness and materials of sun visor covers.

The sun visor body comprises a core as described previously and two pads, such as foam pads, one of the pads being applied to a first one of the two major surfaces of the core and another one of the pads being applied to a second one of the two major surfaces of the core. In some embodiments of the inventions, the pads are substantially made of EPP, as known in the art. The pads can basically be conventional sunvisor pads as known in the art, although somewhat adapted to accommodate the retention member.

In some embodiments the pads have a perimeter and the retention member lies flush with the perimeter of the pads. This arrangement can facilitate the insertion of the end of the cover into the aperture of the retention member, without or with a minimized risk of damaging the often relatively soft pads. On the other hand, it reduces the risk that the user will feel the retention member rather than the relatively soft pads under the cover, when touching the sun visor.

In some embodiments the pads have a perimeter and the retention member is recessed from the perimeter of the pads by a distance (g) in the range of 0.1-5 mm, preferably 0.1-1 mm, more preferably 0.1-0.5 mm, even more preferably 0.1-0.3 mm. It has been found that it can sometimes be preferred to have the retention member recessed or offset with regard to the perimeter of the pads by a certain distance, so as to allow for an appropriate stretch and fit of the material of the cover where it is introduced between the pads, into the aperture of the retention member. An advantage with a slight recess is that it also reduces the risk of marks on, for example, a thin PVC cover, taking into account that the retention member may be of a harder material than the pads.

Another aspect of the invention relates to a sun visor for an automotive vehicle, such as a car or truck, comprising a sun visor body as described previously and a cover, covering the pads.

In some embodiments an end of the cover is retained in the aperture of the retention member. The cover can be of any suitable material, such as PVC, woven or non-woven fabric, etc. The cover is bag-shaped, that is, in the form of a bag or sock, that is, defining an inner space accessible through an opening in a side of the cover, such as an opening in one of the shorter sides of the fabric, at what can be regarded an open end of the cover. The sun visor body has typically been inserted into the cover through the opening, and thereafter the open end of the cover has been inserted into the aperture of the retaining member, thereby establishing the retention of the cover.

In some embodiments, the cover has been obtained by joining two parts of the selected material according to their perimeter, by sewing, high frequency welding, laser welding, or in any other suitable manner, just leaving an opening through which the sun visor core can be inserted.

A further aspect of the invention is a method of manufacturing a sun visor for an automotive vehicle, comprising:
- providing a sun visor body as described previously,
- providing a cover defining an interior space accessible through an opening in an end of the cover;
- inserting the sun visor body into the cover through the open end thereof;
- inserting the open end of the cover into the aperture of the retention member.

What has been explained above applies, *mutatis mutandis.*

### BRIEF DESCRIPTION OF THE DRAWINGS

To complete the description and in order to provide for a better understanding of the invention, a set of drawings is provided. Said drawings form an integral part of the description and illustrate some embodiments of the invention, which should not be interpreted as restricting the scope of the invention, but just as examples of how the invention can be carried out. The drawings comprise the following figures:
Figure 1 is a top view of a partially assembled sun visor body according to the state of the art.
Figure 2 is a top view of a partially assembled sun visor body according to one possible embodiment of the invention.
Figure 3 is a perspective view of part of the sun visor body of figure 2.
Figure 4 is a schematic perspective view of a detail of a retention member in an embodiment of the invention.
Figure 5 is a schematic front view of the retention member of figure 4.
Figure 6 is a schematic cross sectional view of a detail of the retention member of figure 4.
Figure 7 is a schematic perspective view of a detail of the retention member of figure 4.
Figures 8A and 8B are schematic cross-sectional views of a detail of a sun visor according to two alternative embodiments of the invention.
Figures 9A-9D schematically illustrate how a cover can be applied over the sun visor body in accordance with an embodiment of the invention.

### DESCRIPTION OF AWAY OF CARRYING OUT THE INVENTION

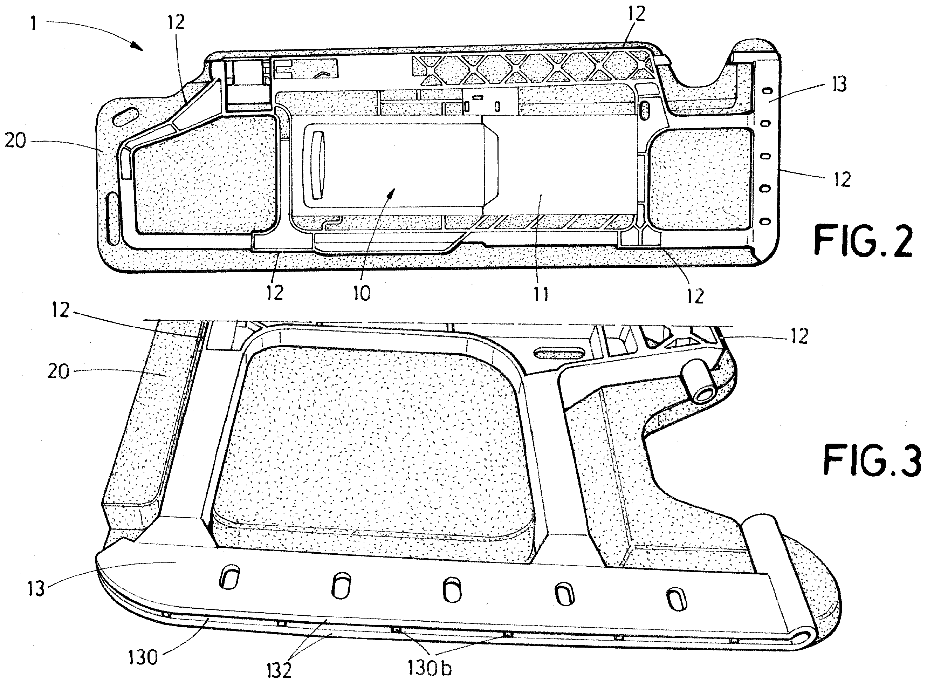

Figures 2 and 3 schematically illustrate one possible embodiment of the invention, namely, a partially assembled sun visor 1 comprising a mainly plastic core 10 with two major surfaces 11 (one of which is shown in figure 2) and a perimeter 12 determining the outline of the core 10. The other major surface is in contact with a pad 20. The sun visor has a generally rectangular configuration, and in correspondence with one of its shorter sides the core 10 comprises a retention member 13. The retention member features a gap or aperture 130 in correspondence with the perimeter, and this aperture is adapted for receiving and retaining a portion of a cover, as will be explained below. As shown in figure 3, the gap or aperture 13 is formed between two edges 132 of the retention member 13 which extend along and define the corresponding portion of the perimeter 12 of the core.

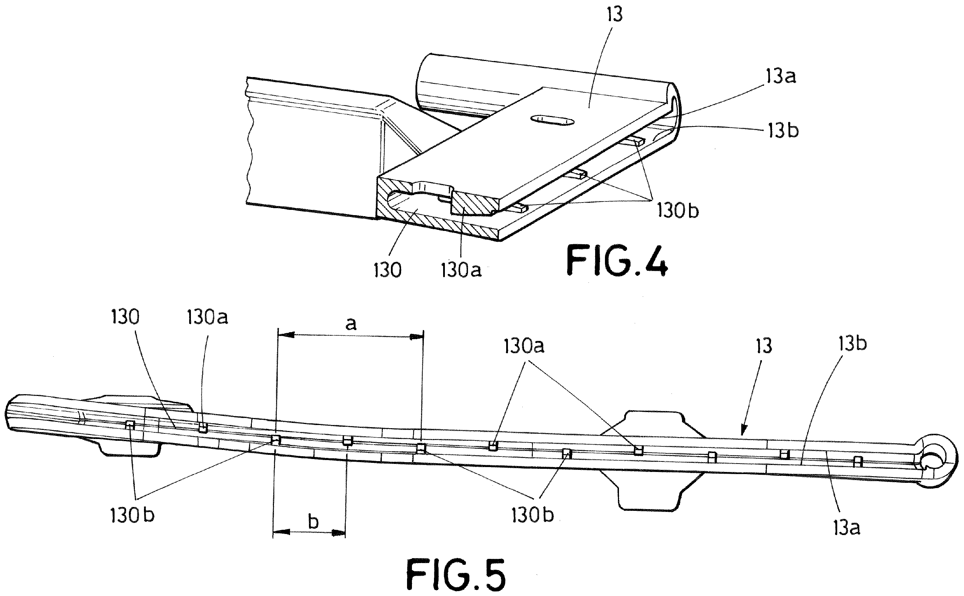

The aperture is defined between two opposing internal surfaces 13a, 13b of the retention member, and from these surfaces a plurality of projections or teeth 130a, 130b extend for the purpose of retaining an open end portion of a cover. As schematically illustrated in figures 4 and 5, in one embodiment of the invention the teeth are distributed between the opposing surfaces of the gap or aperture 130, so that one row of teeth 130a is arranged on one of the surfaces, and another row of teeth 130b is arranged on the opposite surface, in an offset or staggered manner so that the teeth 130a in the first row, such as in an upper row, are placed between the teeth in the second row, such as in the lower row, in the direction of the gap according to the circumference of the core. Preferably, the two rows are offset in relation to each other so that the teeth of one row are spaced from the teeth of the other row by a distance corresponding to approximately 50% of the distance between the centers of two consecutive teeth in any of the rows. This is schematically illustrated in figure 5, showing how the distance b between the centers of two consecutive teeth 130a and 130b along the gap 130 (in the direction of the perimeter of the core) is about 50% of the distance between the centers of two consecutive teeth 130a in the upper row. In a typical implementation of the embodiment shown in figure 5, a is in the range of 10-30 mm and b is in the range of 5-15 mm.

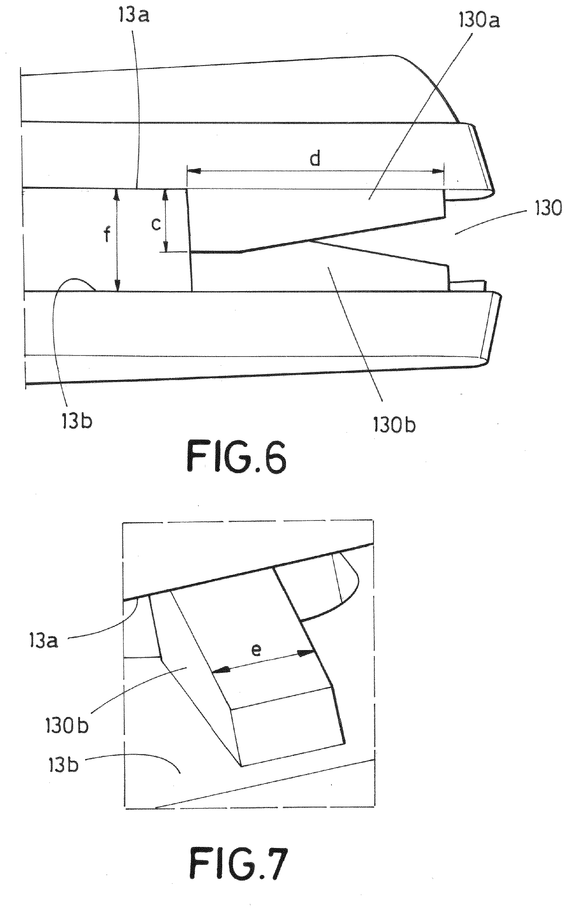

In the illustrated embodiment, and as schematically illustrated in figures 6 and 7, the gap has a height f (for example, in the range of 1.5-3 mm), and the teeth have: a height c (for example, in the range of 1-2 mm), a length d (for example, in the range of 3-10 mm) in the direction perpendicular to the perimeter of the core (that is, in the direction into the gap), and a width e (for example, in the range of 0.5-2 mm). Values of c, d, e and f within these ranges are considered to be especially appropriate in the context of vehicle sun visors.

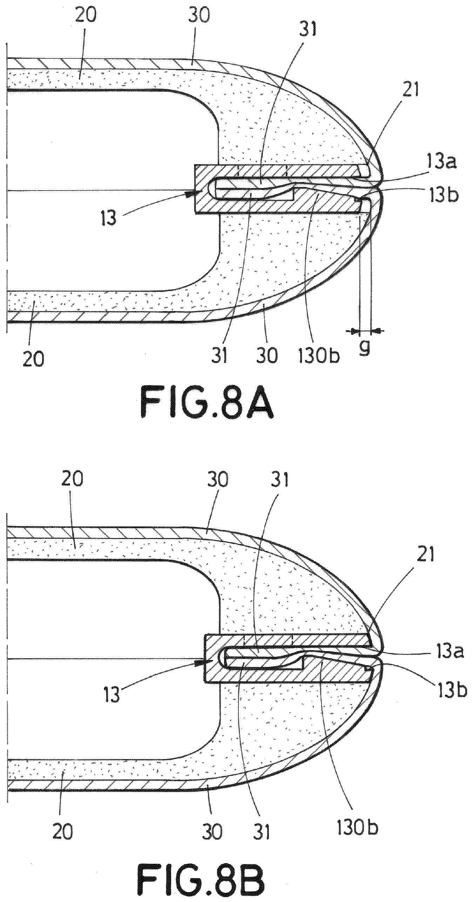

Whereas figure 3 schematically illustrates how the retention member can extend beyond the pads, it may be preferred that the retention member rather be recessed in relation to the pads, as schematically illustrated in figure 8A. Figure 8A shows a cross section of a sun visor in accordance with an embodiment of the invention, including a core with a retention member 13 and two EPP pads 20. A cover 30 has been applied over the body comprising pads 20 and core (including the retention member 13), and the open end 31 of the sock-like cover 30 has been inserted into the gap of the retention member, as schematically illustrated in figure 8A. Differently from the embodiment shown in figure 3, here the retention member is slightly recessed in relation to the perimeter 21 of the pads, by a distance g in, for example, the range of 0.1-5 mm. This can help to ensure that a person contacting the sun visor will always feel the pads under the cover, rather than feeling the possibly harder retention member. At the same time it is achieved that the retention member will not leave visible marks on, for example, an external surface of a PVC cover. In some embodiments, it is preferred that the distance (offset) g be small, such as in the range of 0.1-1 mm, or 0.1-0.5 mm, such as 0.1-0.3 mm.

Figure 8B shows an alternative embodiment in which the retention member 13 lies flush with the perimeter 21 of the pads 20. That is, here the offset g is approximately cero.

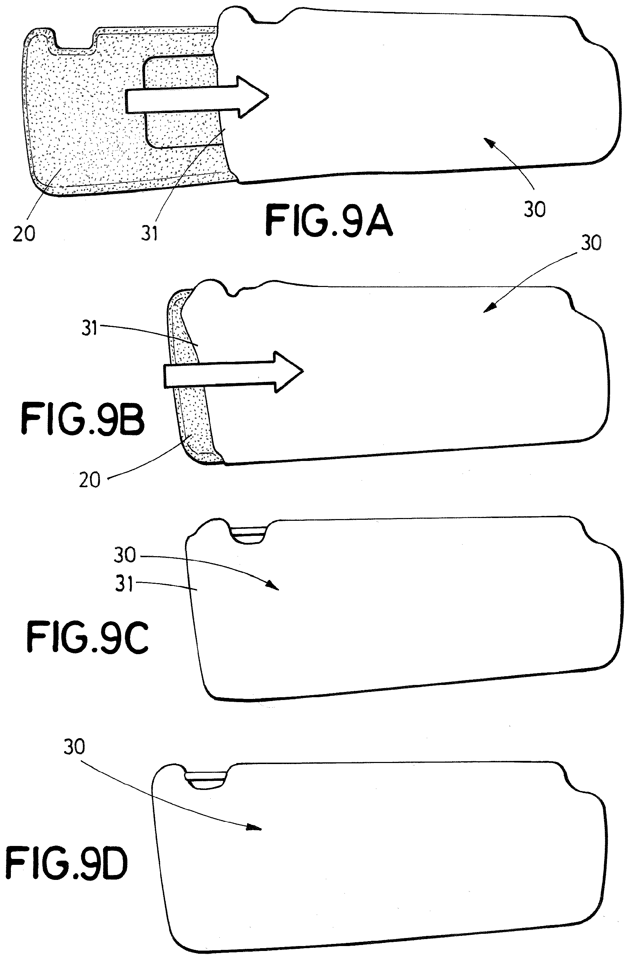

Figures 9A-9C schematically illustrate how a sun visor body including a core covered by two EPP pads 20 (one of which can be observed in figures 9A and 9B) is inserted into a cover 30 with a bag-like or sock-like configuration, featuring an open end 31. The cover fits snuggly onto the sun visor body, and once the sun visor body has been inserted, the open end 31 is turned over inwards and inserted into the retention member 13, see figures 9D and figures 8A and 8B. Depending on the material, additional measures can be taken to secure the cover, for example, by high frequency or laser welding at the perimeter. In some embodiments, the end of the cover is not inserted into the aperture but closed by welding or similar. This can, for example, by practical in the case of PVC covers.

The illustrated embodiments are suitable for the manufacture of sun visors with a large variety of covers, including covers of woven and non-woven fabrics, PVC, etc.

In this text, the term "comprises" and its derivations (such as "comprising", etc.) should not be understood in an excluding sense, that is, these terms should not be interpreted as excluding the possibility that what is described and defined may include further elements, steps, etc.

Unless otherwise specified, any indicated ranges include the recited end points.

The invention is obviously not limited to the specific embodiment(s) described herein, but also encompasses any variations that may be considered by any person skilled in the art (for example, as regards the choice of materials, dimensions, components, configuration, etc.), within the general scope of the invention as defined in the claims.

## Claims

1. A sun visor comprising a sun visor body constituted by a plastic core (10) comprising two major surfaces (11) and a perimeter (12), and two foam pads (20) defining the external shape of the sun visor, one of the pads (20) being applied to a first one of the two major surfaces (11) of the core (10) and another one of the pads (20) being applied to a second one of the two major surfaces of the core (10) such that the plastic core (109) is sandwiched between the foam pads (20),
wherein the sun visor further comprises a flexible cover (30) covering the foam pads (20), **characterized in that** the cover (30) is bag-shaped, defining an inner space accessible through an opening (31) in one of the shorter sides of the cover (30) into which the sun visor body has been inserted with snug fit, and **in that** the plastic core (10) comprises,
in correspondence with one portion of the perimeter (12), a retention member (13) for retaining a portion of the open end (31) of the flexible cover (30), the retention member (13) comprising an aperture (130) for receiving the portion of the flexible cover (30), the retention member (13) further comprising, in said aperture (130), a plurality of projections (130a, 130b) adapted for engaging the flexible cover.

2. The sun visor according to claim 1, wherein the aperture (130) is situated between two edges (132) of the retention member extending along a portion of the perimeter (12) of the core (10).

3. The sun visor according to any one of the preceding claims, wherein the aperture (130) is defined between two opposing internal surfaces (13a, 13b) of the retention member (13), and wherein the projections (130a, 130b) extend from said surfaces forming at least a first row of projections (130a) extending from a first one of said surfaces (13a), and a second row of projections (130b) extending from a second one of said surfaces.

4. The sun visor according to claim 3, wherein the first row of projections and the second row of projections are staggered in relation to each other, so that at least some of the projections (130a) of the first row of projections are placed between two projections (130b) of the second row of projections, and vice-versa

5. The sun visor according to claim 4, wherein at least some of the projections (130a) of the first row of projections are spaced a distance (b) in the range of 5-15 mm from the adjacent projections (130b) in the second row of projections in the direction along the rows of projections, and wherein in each of the rows of projections, the distance (a) between at least two adjacent projections is in the range of 15-30 mm, these distances corresponding to the spacings between the centerpoints of the respective projections.

6. The sun visor according to any one of the preceding claims, wherein the aperture (130) has a height (f) in the range of 1.5-3 mm.

7. The sun visor according to claim 6, wherein at least some of the projections (130a, 130b) have a height (c) in the range of 1-2 mm.

8. The sun visor according to any one of the preceding claims, wherein at least some of the projections (130a, 130b) have a length (d) in the direction into the aperture in the range of 3-10 mm.

9. The sun visor according to any one of the preceding claims, wherein at least some of the projections (130a, 130b) have a width (e) in the direction along the aperture in the range of 0.5-2 mm.

10. The sun visor according to any one of the preceding claims wherein the pads (20) have a perimeter (21), and wherein the retention member (13) lies flush with the perimeter (21) of the pads (20).

11. The sun visor according to any one of the claims 1-9 wherein the pads (20) have a perimeter (21), and wherein the retention member (13) is recessed from the perimeter (21) of the pads by a distance (g) in the range of 0.1-5 mm, preferably 0.1-1 mm, more preferably 0.1-0.5 mm, even more preferably 0.1-0.3 mm.

12. A method of manufacturing a sun visor for an automotive vehicle, comprising:
- providing a sun visor body (20) constituted by a plastic core (10) comprising two major surfaces (11) and a perimeter (12), and two foam pads (20) defining the external shape of the sun visor, one of the pads (20) being applied to a first one of the two major surfaces (11) of the core (10) and another one of the pads (20) being applied to a second one of the two major surfaces of the core (10) such that the plastic core (10) is sandwiched between the foam pads (20), the plastic core (10) comprising, in correspondence with one portion of the perimeter (12), a retention member (13) comprising an aperture (130)_,
- providing a flexible cover (30) for covering the pads (20), the cover (30) being bag-shaped, defining an inner space accessible through an open end (31) of the cover (30) ; ,
- inserting the sun visor body (20) into the cover (30) through the open end (31) thereof;
- inserting a portion of the open end (31) of the cover (30) into the aperture (130) of the retention member (13) for retaining a portion of the open end (31) of the flexible cover (30), the retention member (13) further comprising, in said aperture (130), a plurality of projections (130a, 130b) adapted for engaging the flexible cover.

13. The method according to claim 12 wherein the foam pads (20) have a perimeter (21), and wherein the retention member (13) lies flush with the perimeter (21) of the pads (20).

14. The method according to claim 12 wherein the foam pads (20) have a perimeter (21), and wherein the retention member (13) is recessed from the perimeter (21) of the pads by a distance (g) in the range of 0.1-5 mm, preferably 0.1-1 mm, more preferably 0.1-0.5 mm, even more preferably 0.1-0.3 mm.

## Patentansprüche

1. Sonnenblende, umfassend einen Sonnenblendenkörper, der aus einem Kunststoffkern (10) besteht und zwei Hauptoberflächen (11) und einen Umfang (12) und zwei Schaumstoffkissen (20), die die äußere Form der Sonnenblende definieren, umfasst, wobei eines der Kissen (20) auf eine erste der zwei Hauptoberflächen (11) des Kerns (10) angebracht ist und ein anderes der Kissen (20) auf eine zweite der zwei Hauptoberflächen des Kerns (10) angebracht ist, so dass der Kunststoffkern (10) sandwichartig zwischen den Schaumstoffkissen (20) angeordnet ist,
wobei die Sonnenblende ferner eine flexible Hülle (30) umfasst, die die Schaumstoffkissen (20) bedeckt, **dadurch gekennzeichnet, dass** die Hülle (30) taschenförmig ist und einen Innenraum definiert, der durch eine Öffnung (31) an einer der kürzeren Seiten der Abdeckung (30) zugänglich ist, in die der Sonnenblendenkörper passgenau eingesetzt wurde, und dadurch, dass der Kunststoffkern (10) in Übereinstimmung mit einem Abschnitt des Umfangs (12) ein Rückhalteglied (13) zum Halten des offenen Endes (31) der flexiblen Abdeckung (30), wobei das Rückhalteglied (13) eine Aussparung (130) zum Aufnehmen des Abschnitts der flexiblen Abdeckung (30) umfasst, das Rückhalteglied (13) ferner mehrere Vorsprünge (130a, 130b), die zum Ineingriffnehmen der flexiblen Abdeckung ausgelegt sind, in der Aussparung (130) umfasst.

2. Sonnenblende nach Anspruch 1, wobei die Aussparung (130) sich zwischen zwei Rändern (132) des Rückhalteglieds befindet und sich entlang eines Abschnitts des Umfangs (12) des Kerns (10) erstreckt.

3. Sonnenblende nach einem der vorhergehenden Ansprüche, wobei die Aussparung (130) zwischen zwei gegenüberliegenden Innenflächen (13a, 13b) des Rückhalteglieds (13) definiert ist, und wobei die Vorsprünge (130a, 130b) sich von den Flächen erstrecken, die mindestens eine erste Reihe von Vorsprüngen (130a), die sich von einer ersten der Flächen (13a) erstrecken, und eine zweite Reihe von Vorsprüngen (130b), die sich von einer zweiten der Flächen erstrecken, bilden.

4. Sonnenblende nach Anspruch 3, wobei die erste Reihe von Vorsprüngen und die zweite Reihe von Vorsprüngen in Bezug zueinander gestapelt sind, so dass zumindest einige der Vorsprünge (130a) der ersten Reihe von Vorsprüngen zwischen zwei Vorsprüngen (130b) der zweiten Reihe von Vorsprüngen und umgekehrt platziert sind.

5. Sonnenblende nach Anspruch 4, wobei zumindest einige der Vorsprünge (130a) der ersten Reihe von Vorsprüngen in einem Abstand (b) im Bereich von 5-15 mm von den benachbarten Vorsprüngen (130b) in der zweiten Reihe von Vorsprüngen in der Richtung entlang den Reihen von Vorsprüngen beabstandet sind, und wobei der Abstand (a) zwischen mindestens zwei benachbarten Vorsprüngen in jeder Reihe von Vorsprüngen im Bereich von 15-30 mm liegt, wobei diese Abstände den Beabstandungen zwischen den Mittelpunkten der jeweiligen Vorsprüngen entsprechen.

6. Sonnenblende nach einem der vorhergehenden Ansprüche, wobei die Aussparung (130) eine Höhe (f) im Bereich von 1,5-3 mm aufweist.

7. Sonnenblende nach Anspruch 6, wobei zumindest einige der Vorsprünge (130a, 130b) eine Höhe (c) im Bereich von 1-2 mm aufweisen.

8. Sonnenblende nach einem der vorhergehenden Ansprüche, wobei zumindest einige der Vorsprünge (130a, 130b) eine Länge (d) in der Richtung in die Aussparung im Bereich von 3-10 mm aufweisen.

9. Sonnenblende nach einem der vorhergehenden Ansprüche, wobei zumindest einige der Vorsprünge (130a, 130b) eine Breite (e) in der Richtung entlang der Aussparung im Bereich von 0,5-2 mm aufweisen.

10. Sonnenblende nach einem der vorhergehenden Ansprüche, wobei die Kissen (20) einen Umfang (21) aufweisen, und wobei das Rückhalteglied (13) bündig an dem Umfang (21) der Kissen (20) anliegt.

11. Sonnenblende nach einem der Ansprüche 1-9, wobei die Kissen (20) einen Umfang (21) aufweisen, und wobei das Rückhalteglied (13) von dem Umfang (21) der Kissen mit einem Abstand (g) im Bereich von 0,1-5 mm, vorzugsweise 0,1-1 mm, besonders bevorzugt 0,1-0,5 mm, ganz besonders bevorzugt 0,1-0,3 mm vertieft liegt.

12. Verfahren zum Herstellen einer Sonnenblende für ein Kraftfahrzeug, umfassend:
- Bereitstellen eines Sonnenblendenkörpers (20), der aus einem Kunststoffkern (10) besteht und zwei Hauptoberflächen (11) und einen Umfang (12) und zwei Schaumstoffkissen (20), die die äußere Form der Sonnenblende definieren, umfasst, wobei eines der Kissen (20) auf eine erste der zwei Hauptoberflächen (11) des Kerns (10) angebracht ist und ein anderes der Kissen (20) auf eine zweite der zwei Hauptoberflächen des Kerns (10) angebracht ist, so dass der Kunststoffkern (10) sandwichartig zwischen den Schaumstoffkissen (20) angeordnet ist, wobei der Kunststoffkern (10) in Übereinstimmung mit einem Abschnitt des Umfangs (12) ein Rückhalteglied (13) umfasst, das eine Aussparung (130) umfasst,
- Bereitstellen einer flexiblen Abdeckung (30) zum Bedecken der Kissen (20), wobei die Abdeckung (30) taschenförmig ist und einen Innenraum definiert, der durch ein offenes Ende (31) der Abdeckung (30) zugänglich ist,
- Einsetzen des Sonnenblendenkörpers (20) in die Abdeckung (30) durch deren offenes Ende (31);
- Einsetzen eines Abschnitts des offenen Endes (31) der Abdeckung (30) in die Aussparung (130) des Rückhalteglieds (13) zum Halten eines Abschnitts des offenen Endes (31) der flexiblen Abdeckung (30), wobei das Rückhalteglied (13) ferner mehrere Vorsprünge (130a, 130b), die zum Ineingriffnehmen der flexiblen Abdeckung ausgelegt sind, in der Aussparung (130) umfasst.

13. Verfahren nach Anspruch 12, wobei die Schaumstoffkissen (20) einen Umfang (21) aufweisen, und wobei das Rückhalteglied (13) bündig an dem Umfang (21) der Kissen (20) anliegt.

14. Verfahren nach Anspruch 12, wobei die Schaumstoffkissen (20) einen Umfang (21) aufweisen, und wobei das Rückhalteglied (13) von dem Umfang (21) der Kissen mit einem Abstand (g) im Bereich von 0,1-5 mm, vorzugsweise 0,1-1 mm, besonders bevorzugt 0,1-0,5 mm, ganz besonders bevorzugt 0,1-0,3 mm vertieft liegt.

## Revendications

1. Pare-soleil comprenant un corps de pare-soleil constitué par un noyau en plastique (10) comprenant deux surfaces majeures (11) et un périmètre (12) et deux coussinets en mousse (20) définissant la forme externe du pare-soleil, l'un des coussinets (20) étant appliqué sur une première surface des deux surfaces majeures (11) du noyau (10) et un autre des coussinets (20) étant appliqué sur une seconde surface des deux surfaces majeures du noyau (10) de sorte que le noyau en plastique (10) est pris en sandwich entre les coussinets en mousse (20),
dans lequel le pare-soleil comprend en outre un revêtement flexible (30) recouvrant les coussinets en mousse (20), **caractérisé en ce que** le revêtement (30) est en forme de sac, définissant un espace interne accessible par le biais d'une ouverture (31) dans l'un des côtés les plus courts du revêtement (30) dans lequel le corps de pare-soleil a été inséré avec un ajustement serré, et **en ce que** le noyau en plastique (10) comprend, en correspondance avec une partie du périmètre (12), un élément de retenue (13) pour retenir une partie de l'extrémité ouverte (31) du revêtement flexible (30), l'élément de retenue (13) comprenant une ouverture (130) pour recevoir la partie du revêtement flexible (30), l'élément de retenue (13) comprenant en outre, dans ladite ouverture (130), une pluralité de saillies (130a, 130b) adaptées pour mettre en prise le revêtement flexible.

2. Pare-soleil selon la revendication 1, dans lequel l'ouverture (130) est située entre deux bords (132) de l'élément de retenue s'étendant le long d'une partie du périmètre (12) du noyau (10).

3. Pare-soleil selon l'une quelconque des revendications précédentes, dans lequel l'ouverture (130) est définie entre deux surfaces internes (13a, 13b) opposées de l'élément de retenue (13), et dans lequel les saillies (130a, 130b) s'étendent à partir desdites surfaces formant au moins une première rangée de saillies (130a) s'étendant à partir d'une première desdites surfaces (13a), et une seconde rangée de saillies (130b) s'étendant à partir d'une seconde desdites surfaces.

4. Pare-soleil selon la revendication 3, dans lequel la première rangée de saillies et la seconde rangée de saillies sont en quinconce l'une par rapport à l'autre, de sorte qu'au moins certaines des saillies (130a) de la première rangée de saillies sont placées entre deux saillies (130b) de la seconde rangée de saillies, et vice-versa.

5. Pare-soleil selon la revendication 4, dans lequel au moins certaines des saillies (130a) de la première rangée de saillies sont espacées à une distance (b) dans la plage de 5 à 15 mm des saillies (130b) adjacentes dans la seconde rangée de saillies dans la direction le long des rangées de saillies, et dans lequel dans chacune des rangées de saillies, la distance (a) entre au moins deux saillies adjacentes est dans la plage de 15 à 30 mm, ces distances correspondant aux espacements entre les points centraux des saillies respectives.

6. Pare-soleil selon l'une quelconque des revendications précédentes, dans lequel l'ouverture (130) a une hauteur (f) dans la plage de 1,5 à 3 mm.

7. Pare-soleil selon la revendication 6, dans laquelle au moins certaines des saillies (130a, 130b) ont une hauteur (c) dans la plage de 1 à 2 mm.

8. Pare-soleil selon l'une quelconque des revendications précédentes, dans lequel au moins certaines des saillies (130a, 130b) ont une longueur (d) dans la direction dans l'ouverture dans la plage de 3 à 10 mm.

9. Pare-soleil selon l'une quelconque des revendications précédentes, dans lequel au moins certaines des saillies (130a, 130b) ont une largeur (e) dans la direction le long de l'ouverture dans la plage de 0,5 à 2 mm.

10. Pare-soleil selon l'une quelconque des revendications précédentes, dans lequel les coussinets (20) ont un périmètre (21), et dans lequel l'élément de retenue (13) est à fleur avec le périmètre (21) des coussinets (20).

11. Pare-soleil selon l'une quelconque des revendications 1 à 9, dans lequel les coussinets (20) ont un périmètre (21) et dans lequel l'élément de retenue (13) est enfoncé par rapport au périmètre (21) des coussinets selon une distance (g) dans la plage de 0,1 à 5 mm, de préférence de 0,1 à 1 mm, encore de préférence de 0,1 à 0,5, encore de préférence de 0,1 à 0,3 mm.

12. Méthode pour fabriquer un pare-soleil pour un véhicule automobile comprenant les étapes consistant à :
prévoir un corps de pare-soleil (20) constitué par un noyau en plastique (10) comprenant deux surfaces majeures (11) et un périmètre (12) et deux coussinets en mousse (20) définissant la forme externe du pare-soleil, l'un des coussinets (20) étant appliqué sur une première des deux surfaces majeures (11) du noyau (10) et un autre des coussinets (20) étant appliqué sur une seconde des deux surfaces majeures du noyau (10) de sorte que le noyau en plastique (10) est pris en sandwich entre les coussinets en mousse (20), le noyau en plastique (10) comprenant, en correspondance avec une partie du périmètre (12), un élément de retenue (13) comprenant une ouverture (130) ;
prévoir un revêtement flexible (30) pour recouvrir les coussinets (20), le revêtement (30) étant en forme de sac, définissant un espace interne accessible par le biais d'une extrémité ouverte (31) du revêtement (30) ;
insérer le corps de pare-soleil (20) dans le revêtement (30) par le biais de son extrémité ouverte (31) ;
insérer une partie de l'extrémité ouverte (31) du revêtement (30) dans l'ouverture (130) de l'élément de retenue (13) pour retenir une partie de l'extrémité ouverte (31) du revêtement flexible (30), l'élément de retenue (13) comprenant en outre, dans ladite ouverture (130), une pluralité de saillies (130a, 130b) adaptées pour mettre en prise le revêtement flexible.

13. Méthode selon la revendication 12, dans laquelle les coussinets en mousse (20) ont un périmètre (21), et dans laquelle l'élément de retenue (13) est à fleur avec le périmètre (21) des coussinets (20).

14. Méthode selon la revendication 12, dans laquelle les coussinets en mousse (20) ont un périmètre (21), et dans laquelle l'élément de retenue (13) est enfoncé par rapport au périmètre (21) des coussinets selon une distance (g) dans la plage de 0,1 à 5 mm, de préférence de 0,1 à 1 mm, encore de préférence de 0,1 à 0,5 mm, encore de préférence de 0,1 à 0,3 mm.
